(19) Europäisches Patentamt
European Patent Office
Office européen des brevets

(11) **EP 2 853 971 B1**

(12) **EUROPEAN PATENT SPECIFICATION**

(45) Date of publication and mention
of the grant of the patent:
**03.10.2018 Bulletin 2018/40**

(51) Int Cl.:
**G05B 23/02** *(2006.01)* **G01M 15/14** *(2006.01)*
**F01D 21/00** *(2006.01)* **F02C 9/00** *(2006.01)*

(21) Application number: **14180146.4**

(22) Date of filing: **07.08.2014**

(54) **Operating parameter monitoring method**

Betriebsparameter-Überwachungsverfahren

Procédé de surveillance d'un paramètre de fonctionnement

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **03.09.2013 GB 201315654**

(43) Date of publication of application:
**01.04.2015 Bulletin 2015/14**

(73) Proprietor: **Rolls-Royce plc**
**London SW1E 6AT (GB)**

(72) Inventors:
• **Priori, Tiziano**
**Nottingham, Nottinghamshire NG1 5AS (GB)**

• **King, Stephen**
**Swadlincote, DE11 0NH (GB)**
• **Savarin, Vincent**
**Nottingham, Nottinghamshire NG7 4HR (GB)**

(74) Representative: **Rolls-Royce plc**
**Intellectual Property Dept SinA-48**
**PO Box 31**
**Derby DE24 8BJ (GB)**

(56) References cited:
EP-A1- 1 936 461      EP-A1- 2 469 041
EP-A2- 2 081 132      WO-A1-2009/016020
WO-A1-2011/023924      US-A1- 2012 150 491
US-A1- 2012 161 965

## Description

The present invention is concerned with monitoring of one/or more operating parameters for deviation beyond a threshold. More specifically the invention relates to a method of monitoring an operating parameter, an apparatus arranged to perform the method and a machine readable medium. The invention may have particular application in engine health monitoring (EHM) for aircraft gas turbine engines. For simplicity the remainder of this introduction discusses the relevant background with reference to EHM. This is not however intended to be limiting and the invention may also be applied to any apparatus or system having measurable operating parameters, including for example apparatus used in the aerospace, marine and energy sectors.

EHM systems log the actions, performance and status of the components in a gas turbine engine. Data from various components, sub-systems or systems is collected and in some instances used to look for faults or indicators that a fault may occur. Accurately predicting and/or identifying faults can be valuable in managing servicing and increasing efficiency. Nonetheless, false positives (i.e. an indication that a fault is developing or has developed when in fact there is no such fault) can be a costly diversion. In monitoring operating parameters there is therefore a trade-off between setting a threshold at a level where it detects all relevant events and yet does not cause too many false positives.

Present methods of setting thresholds for event detection exacerbate this problem. The threshold set is typically a 'fleetwide' set threshold for a particular gas turbine model. As will be appreciated however, even gas turbines of the same model do not perform identically at all times. Ambient conditions, operating regime and engine age all play a role in determining what may be considered normal and/or acceptable operation for a given engine within the fleet. Setting a fleetwide threshold may therefore increase the incidence of false positives and/or increase the risk of a failure to detect a real fault within the noise caused by other factors.

Previous approaches to solving these issues are set out in the following documents.

WO 2009/016020 A1 refers to a method for monitoring operation parameters of wind turbines. Operation parameter measurements for one of those wind turbines are compared with the average of measurement values of a plurality of wind turbines, and if the difference exceeds a threshold, a fault is detected.

US 2012/161965 A1 refers to a method of monitoring operation parameters of a turbine. A mean of operation parameter measurements over a first time window is compared to a mean of operation parameter measurements over a second, shorter time window, and based on the difference, an alarm is raised.

EP 2 469 041 A1 also refers to a method of monitoring operation parameters of a turbine. Temperatures over time in at least three probing points, e.g. combustors, are measured, and a variance of the measurements taken at one point are compared to a threshold which is based on the variances at the other at least two points. A predetermined condition is detected based on the comparison result.

According to a first aspect of the invention there is provided a method of monitoring an operating parameter of an apparatus forming part of a system comprising one or more additional apparatus, comprising the steps of:

> a) taking a measurement of the operating parameter of the apparatus on multiple occasions and of the same operating parameter of the one or more additional apparatus on multiple occasions;
> b) determining one or more apparatus comparison values, each defined as the difference between a measurement of the operating parameter of the apparatus and the average of the same operating parameter measured at the same time for the one or more additional apparatus;
> c) i) determining an operating condition value, whereby the operating condition value is dependent upon one or more of the apparatus comparison values;
> c) ii) determining a set of threshold determining values, whereby each threshold determining value of the set of threshold determining values corresponds to the operating condition value at a particular time, and the set of threshold determining values comprises temporally consecutive threshold determining values;
> d) determining an event threshold by multiplying the standard deviation of the set of threshold determining values by a constant, and adding the result to the mean of the set of threshold determining values;
> e) generating an event signal if the operating condition value is in a regime beyond the event threshold.

As will be appreciated, the word dependent should be interpreted throughout this document to include the possibility of equal to, as well as influenced by and/or proportional to.

Because the event threshold is dependent on past measured values of the operating parameter for the particular apparatus, the event threshold may be tailored to performance of the specific apparatus. The event threshold may therefore factor in considerations such as age/deterioration of the apparatus, recent (and therefore likely current) ambient conditions and recent (and potentially therefore current) operating regime of the apparatus. Where such factors are not accounted for (e.g. where a fleet-wide generic event threshold is used), the event threshold may be unduly rigid, potentially giving rise to false positive event signals or failure to issue an event signal where an event has nonetheless occurred.

The threshold determining values and operating condition values are determined in the same way so

that at any given time the threshold determining value will equal the operating condition value. In other words the data used to determine the event threshold and the data monitored for a cross of the event threshold may be the same and may be used to give rise to the same value.

According to the invention, the method comprises determining one or more apparatus comparison values, each defined as the difference between an operating parameter measurement and the average of the same operating parameter measured at the same time for one or more additional apparatus. Thus, an apparatus comparison value may be determined according to the formula:

$$C = A_1 - \left( \frac{\sum_{i=2}^{n}(A_i + A_{i+1}...A_n)}{n} \right)$$

where C is the apparatus comparison value, A is the operating parameter measured with the subscript indicating an apparatus number and n is the number of additional apparatus for which an operating parameter has been measured.

The apparatus and the additional apparatus are part of the same broader system. By way of example, where each apparatus is a gas turbine engine, the gas turbine engine and the additional gas turbine engines may be on the same aircraft. In this way the comparison may be between apparatus that are associated, e.g. by physical location or operating regime.

In some embodiments each threshold determining value is equal to the value of a trace at a particular time, the trace resulting from the summation of a smoothed trace of a set of the apparatus comparison values and a smoothed trace of the derivative of the set of apparatus comparison values. Smoothing may be by any suitable means e.g. the fitting of a spline. The use of the derivative of the set of apparatus comparison values may emphasise deviations in the trace resulting from the summation, making peaks and troughs more pronounced.

According to the invention the event threshold is determined by multiplying the standard deviation of the set of threshold determining values by a constant and adding the result to the mean of the set of threshold determining values. It has been found that in the specific case of monitoring operating parameters of gas turbine engines, constant values in the range 2.8 to 3 tend to give a threshold position that represents a good balance between the need to identify events and yet avoid false positives.

In some embodiments the set of threshold determining values comprises a predetermined number of threshold determining values. Where the set is too small, the event threshold may be unduly impacted by a short lived spike. Where the set is too large (perhaps including all recorded threshold determining values) considerable hysteresis may be produced, preventing even a sustained change from giving rise to a meaningful response in the event threshold. By appropriate selection of the number of threshold determining values in the set, the event threshold determined may be more likely to give rise to accurate event signals and avoid false positives. It has been found that a set of approximately eighty threshold determining values, one taken every, may be particularly advantageous in the case of monitoring a gas turbine engine operating parameter.

The set of threshold determining values may include the threshold determining value determined or taken at the most recent time.

According to the invention, the set of threshold determining values comprise temporally consecutive threshold determining values. Consecutive threshold determining values including the most recent value taken may give the most relevant window of threshold determining values in terms of current operation of the apparatus. Where this approach is used with a predetermined number of threshold determining values in the set, the mean and standard deviation may be considered to roll as time progresses, with older values being discarded from the set and newer values being incorporated.

In some embodiments threshold determining values that are in the regime beyond the event threshold are excluded from the set of threshold determining values used to determine the event threshold. In this way the event threshold may not be influenced by performance that is relatively extreme.

According to the invention, each operating condition value is dependent on one or more of the apparatus comparison values. As the apparatus and the additional apparatus are part of the same broader system (as discussed previously), the operating condition value for the apparatus may thus account for and offset unusual behaviour that is nonetheless present in the additional apparatus as well. Where for example the value of the performance parameter being monitored for the apparatus is somewhat unusual, but the other apparatus in the broader system are performing similarly, a false positive event signal may be avoided. This is because the operating condition value that is monitored is dependent not only on the operating parameter for the apparatus but also on the same operating parameter for the additional apparatus. This may be useful where a somewhat unusual value of the operating parameter is the result, for example, of particular operating conditions at the time, normal and acceptable apparatus deterioration through age and/or somewhat unusual but acceptable ambient conditions.

In some embodiments each operating condition value is equal to the value of a trace at a particular time, the trace resulting from the summation of a smoothed trace of a set of the apparatus comparison values and a smoothed trace of the derivative of the set of apparatus comparison values. Smoothing may be by any suitable means e.g. the fitting of a spline. The use of the derivative of the set of apparatus comparison values may emphasise deviations in the trace resulting from the summation, making peaks and troughs more pronounced.

An event signal may comprise the issue of a warning that an event has occurred. This may be appropriate where for example the event signal is considered sufficient to indicate an abnormality. The warning may for example be visual, acoustic, haptic or any combination of the above.

Alternatively the event signal may indicate that the operating condition value is in a regime beyond the event threshold and that an abnormality may therefore have occurred. In this case the event signal may initiate further analysis which may offer one or more further checks that an event has in fact occurred and/or may seek to identify the nature of the event or its symptoms.

In some embodiments the method further comprises determining an extreme value threshold which is dependent on the mean and standard deviation of the set of threshold determining values. Extreme value statistics is a branch of statistics that effectively models the tails of distributions, describing where extreme values drawn from the distribution of 'normal' data are expected to lie.

In some embodiments an extreme event signal is generated if the operating condition value is in the regime beyond the extreme event value threshold. In the determination of the event threshold (discussed previously) it is assumed that the threshold determining values follow a normal distribution, with the event threshold determined being dependent on the mean and standard deviation of that normal distribution. Nonetheless it is known that this distribution is an inaccurate estimate in the regime towards its tails (i.e. in the extreme value regime beyond the event threshold). Therefore by setting a second threshold for the extreme value regime (the extreme value threshold) we can cross-check the issue of an event signal with the issue or non-issue of an extreme event signal. The extreme value threshold may therefore raise the tolerance of the monitoring system to noise and/or other events that might give rise to an event signal despite there being nothing of significance occurring in the apparatus.

In some embodiments the generating of an event signal triggers a check for an extreme event signal at the same time (or within a contemporary time interval), with confirmation of this resulting in the issuing of a warning. In alternative embodiments however, a check for an extreme event signal is not made or is not made as a first response following the generating of an event signal, as will be explained further later.

In some embodiments the method further comprises determining the extreme value threshold according to an estimated distribution for the extreme value regime, the extreme value threshold being equal to the inverse cumulative distribution at a point on the estimated distribution giving a probability of false positive occurrence that is considered acceptable. As will be appreciated the extreme value regime corresponds to threshold determining values that fall above the event threshold. At least in the early stages of monitoring the operating parameter, there may be insufficient operating condition values available in the extreme regime in order that a useful extreme value distribution based on real data can be created. Estimating the distribution may therefore facilitate the determination of an extreme value threshold. Furthermore even if sufficient data in the extreme value regime could be collected over time, at least some of the data may be outdated in the sense that it may for example relate to the apparatus when it was significantly less worn or was operating in different ambient conditions. The use of the estimated distribution may therefore lead to greater accuracy.

In some embodiments the estimated distribution is a Gumbel distribution that is dependent on the mean and standard deviation of the set of threshold determining values. According to the Fisher-Tippett theorem, if we draw $X = \{x_1...x_m\}$ samples from a Gaussian distribution with $p(x) = N(\mu, \sigma^2)$ the probability distribution describing where we expect the most extreme of those m samples to lie tends towards the Gumbel distribution. Assuming a Gumbel distribution for the extreme regime is therefore reasonable. Further the shape and location of a Gumbel distribution in the extreme regime is precisely determined by a given standard deviation and mean of a corresponding normal distribution.

Because the mean and standard deviation of the set of threshold determining values are in essence estimates (the number of threshold determining values in the set being finite), methods (such as Monte Carlo methods) may be used to increase the accuracy of these estimates. It may therefore be these improved estimates of the mean and standard deviation that are used to actually define the shape and position of the Gumbel distribution.

In some embodiments the position and shape of the Gumbel distribution, and therefore the value at which the extreme value threshold is set, is updated using Bayesian techniques to account for additional threshold determining values as and when they are available. Prior to an update the existing Gumbel distribution estimate is used to form a prior belief of the extreme regime distribution. Bayes Theorem is then used to update this prior belief (by altering the mean and standard deviation used to define the Gumbel distribution) in light of the newly available threshold determining value.

In some embodiments the method of monitoring an operating parameter is simultaneously performed for one or more additional different operating parameters of the same apparatus. This simultaneous monitoring of additional specific operating parameters may also be conducted across all additional apparatus in the broader system.

In some embodiments the method further comprises a cascade checking process triggered by the generating of an event signal and comprising at least one check, the order in which each check is performed being pre-determined by the position of the check in a cascade, each check comprising one of the following:

a) whether an event signal has been generated for a particular one of the additional operating parameters at the same time as the event signal for the operating parameter;

b) whether an extreme event signal has been generated for the operating parameter at the same time as the event signal for the operating parameter;

c) whether an extreme event signal has been generated for a particular one of the additional operating parameters at the same time as the event signal for the operating parameter.

In some embodiments the cascade of checks is terminated once one of at least one possible predetermined pattern of check results has been found. The predetermined pattern of check results may correspond to an indication that a particular event has occurred (in which case a warning may be issued to that effect). Alternatively the predetermined pattern of check results may correspond to an indication that a particular or one or more of several possible events may have occurred, in which case a signature check (as discussed further later) may be initiated. Alternatively the predetermined pattern of check results may allow for dismissal of the event signal as background noise in normal operation.

In some embodiments the termination of the cascade check initiates a signature check comprising the steps of:

a) for each of a set of one or more of the monitored operating parameters determining a contemporary operating condition value average from a predefined number of the most recent operating condition values determined in respect of that operating parameter;

b) for each of the set of monitored operating parameters determining a control operating condition value average from a larger predefined number of operating condition values determined in respect of that operating parameter;

c) for each of the set of monitored operating parameters comparing the contemporary operating condition value average to the control operating condition value average to produce a magnitude and direction change from the control operating condition value average to the contemporary operating condition value average;

d) Searching for the best correlation across all magnitude and direction changes produced for the set of monitored operating parameters to one of a number of predetermined magnitude and direction change signatures, each signature containing a magnitude and direction change for one or more of the monitored operating parameters in the set and each signature being known to be indicative of a particular fault;

e) Generating a warning indicative of the fault associated with the best correlating signature.

As will be appreciated the generation of event signals (and optionally extreme event signals) and the cascade check may be primarily or exclusively concerned with establishing that an event has in fact occurred and that the original event signal is not the result of background noise, operator input or other such factors. With the confirmation that a relevant event (such as a fault) has indeed occurred, the signature check may then be used to determine the nature of the event using past experience of the impact of particular faults on the operating parameters. Thereafter an appropriate warning can be generated.

In some embodiments each magnitude change produced is in the form of a percentage change and each direction is in the form of the sign of that percentage change.

In some embodiments the predefined number of the most recent operating condition values used to determine each contemporary operating condition value average is between 1 and 5, may be between 2 and 4 and may be 3.

In some embodiments the predefined number of operating condition values used to determine each control operating condition value average is between 15 and 25, may be between 18 and 22 and may be 20. The operating condition values used to determine each control operating condition values may be the most recently determined operating condition values.

In some embodiments the method is used to monitor the health of an engine. The method may for example have particular application in so called 'engine health monitoring' of aero gas turbines, particularly those on civil aircraft.

In some embodiments each apparatus is a gas turbine engine. The gas turbine engine may be of aero, marine or civil power generation design.

In some embodiments the method only uses operating parameter measurements taken during a cruise phase of flight of an aircraft powered by the gas turbine engine.

According to a second aspect of the invention there is provided a system arranged to perform the method according to the first aspect.

The method of the present invention is preferably encompassed in computer-implemented code and stored on a computer-readable medium. It is thus a computer-implemented method of monitoring an operating parameter of an apparatus. The method may be implemented on a basic computer system comprising a processing unit, memory, user interface means such as a keyboard and/or mouse, and display means. The method may be performed 'offline' on data which has been measured and recorded previously. Alternatively it may be performed in 'real-time', that is at the same time that the data is measured. In this case the computer may be coupled to the system. Where the part or all of the system forms part of a gas turbine engine, the computer may be an electronic engine controller or another on-board processor. Where the gas turbine engine powers an aircraft, the computer may be an engine controller, a processor on-board the engine or a processor on-board the aircraft.

According to a third aspect of the invention there is provided a machine readable medium, the content of which, when run by a processing system, performs the method according to the first aspect. The machine readable medium may be any of the following non-exhaustive list: a CD ROM or RAM; a DVD ROM (including - R/-RW and +R/+RW) or RAM; a floppy disk; a hard-drive; a Solid State Drive; a memory (including a Flash memory card, a USB stick; an SD card, or the like); a tape; a wire; a transmitted signal (including an Internet download; an FTP transfer or the like).

The skilled person will appreciate that a feature described in relation to any one of the above aspects of the invention may be applied mutatis mutandis to any other aspect of the invention.

Embodiments of the invention will now be described by way of example only, with reference to the accompanying Figures, in which:

**Figure 1** is a sectional side view of a gas turbine engine;

**Figure 2** is a trace of apparatus comparison values over time;

**Figure 3** is a smoothed version of the trace in Figure 2;

**Figure 4** is a trace of the derivative of the trace of apparatus comparison values over time shown in Figure 2;

**Figure 5** is a smoothed version of the trace shown in Figure 4;

**Figure 6** is a summation of the traces shown in Figures 3 and 5;

**Figure 7** shows a trace of a determined event threshold as it varies with time overlaid with the trace of Figure 6;

**Figure 8** shows a distribution of apparatus comparison values approximated by a normal distribution and a Gumbal distribution in the extreme regime;

**Figure 9** shows a trace of a determined extreme value threshold as it varies with time overlaid with the trace of Figure 6;

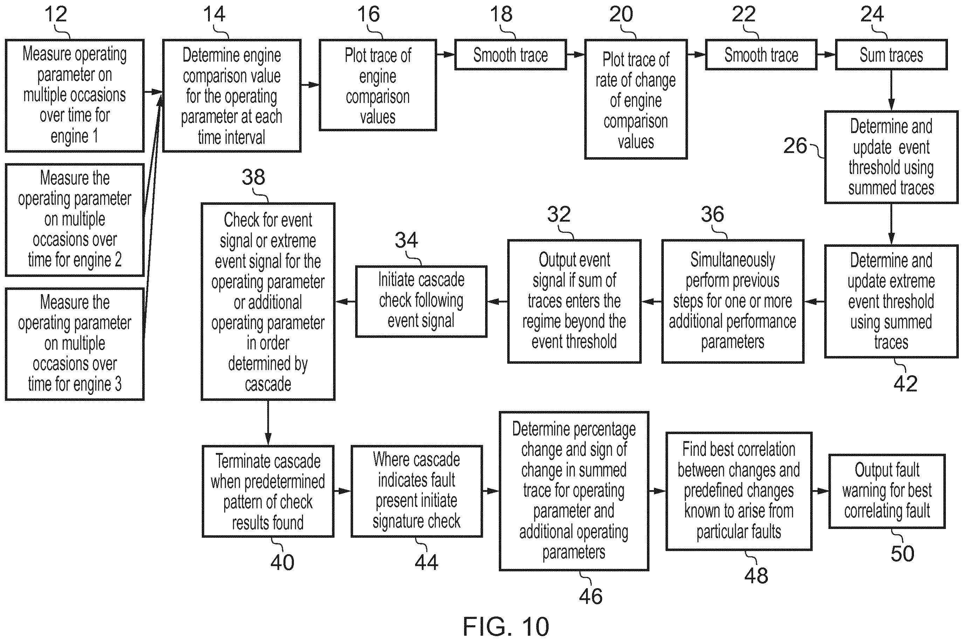

**Figure 10** is a flow diagram showing steps of an exemplary method according to an embodiment of the invention.

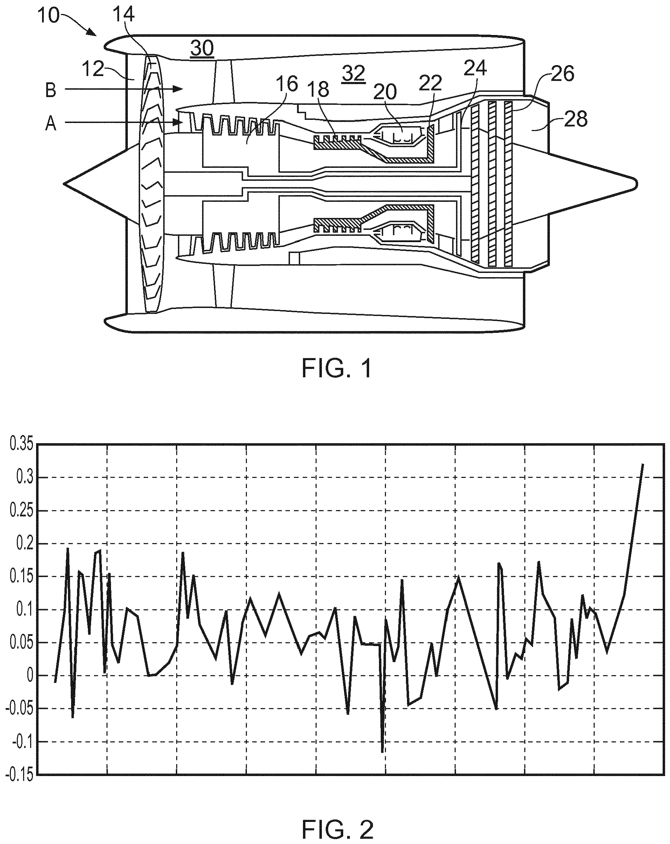

A gas turbine engine 10 is shown in Figure 1 and comprises an air intake 12 and a propulsive fan 14 which generates two airflows A and B. The gas turbine engine 10 comprises, in axial flow A, an intermediate pressure compressor 16, a high pressure compressor 18, a combustor 20, a high pressure turbine 22, an intermediate pressure turbine 24, a low pressure turbine 26 and an exhaust nozzle 28. A nacelle 30 surrounds the gas turbine engine 10 and defines, in axial flow B, a bypass duct 32.

Embodiments of the present invention include engine health monitoring (EHM) methods that may be used to find and identify faults in one or more components of apparatus such as the gas turbine engine 10.

In order to find and identify faults if present, an operating parameter for the engine 10 is measured repeatedly 12 as are several additional operating parameters. In this case turbine gas temperature (TGT), low pressure compressor fan speed (N1), intermediate pressure shaft speed (N2), high pressure shaft speed (N3) and high pressure compressor delivery total pressure (P3) are measured, with TGT being the operating parameter, and the remainder being additional operating parameters. If such operating parameters are measured over a period in which a fault occurs and if that fault affects the value of at least one of the operating parameters, the operating parameter value (and/or its change) might indicate the existence of the fault. Nonetheless changes in the value of one or more of the operating parameters may naturally occur over time even where there is no fault. Such variation may for example be caused by ambient conditions, changes in engine 10 operating regime and/or age of the engine 10. There is therefore a risk of falsely identifying an engine 10 fault where there is none and/or failing to identify a fault, it being hidden in the noise created by other factors.

Some uncertainty is removed by determining 14 and analysing apparatus comparison values (i.e. engine comparison values) rather than the raw operating parameter values. The apparatus comparison value at a particular time in respect of a particular operating parameter is equal to the difference between that operating parameter measurement and the average of the same operating parameter measured at the same time for one or more additional engines on the same aircraft. Apparatus comparison values are therefore determined according to the formula:

$$C = A_1 - \left( \frac{\sum_{i=2}^{n} (A_i + A_{i+1}...A_n)}{n} \right)$$

where C is the apparatus comparison value, A is the operating parameter measured with the subscript indicating the engine number and n is the number of additional engines for which an operating parameter has been measured. The apparatus comparison value may therefore be considered an engine to aircraft comparison.

As will be appreciated the apparatus comparison values will be less prone to variation resulting from ambient condition changes, engine operating regime changes and engine age (assuming the engines on the aircraft are of similar ages and being operated in similar ways). Nonetheless a significant change in the operating parameter measurement for one engine when compared to the other engines will still manifest in a change of the resultant apparatus comparison value.

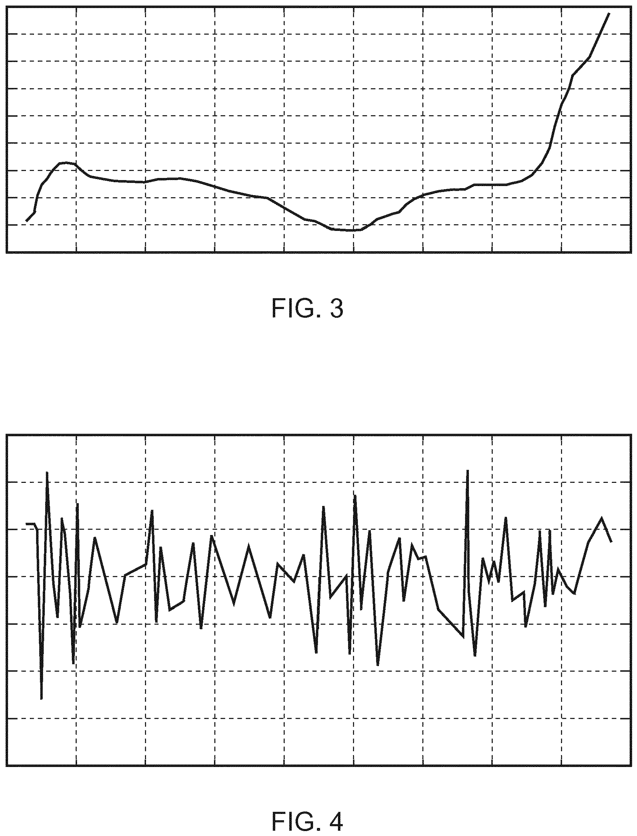

A trace (as shown in Figure 2) of apparatus comparison values varying over time in respect of a particular operating parameter for a particular engine 10 is then plotted 16. This trace is then smoothed 18 (as shown in Figure 3).

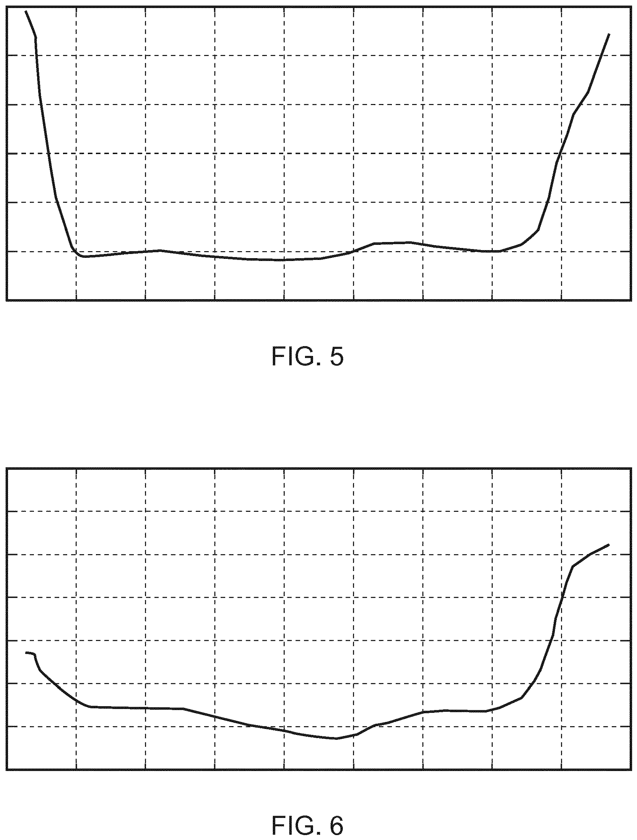

Further emphasise can be given to anomalous (potentially fault indicating) apparatus comparison values by taking account 20 of the derivative (i.e. the change) of the apparatus comparison values over time. Figure 4 shows the derivative of the trace shown in Figure 2 and Figure 5 shows the result of smoothing 22 the trace in Figure 4. The smoothed derivative trace of Figure 5 will emphasise step changes in the apparatus comparison value. Figure 6 is the result of summing 24 the traces of Figures 3 and 5.

The trace of Figure 6 may be used as indicative of an operating condition value at any given time to be considered with a view to finding and identifying faults. The operating condition value at any given time is therefore equal to the value of a trace at a particular time, the trace resulting from the summation of a smoothed trace of a set of the apparatus comparison values and a smoothed trace of the derivative of the set of apparatus comparison values. As will be appreciated the operating condition value at any given time is therefore dependent on at least one of the apparatus comparison values and therefore dependent on one or more of the operating parameter measurements.

In order to define when to issue an event signal (which may indicate that a fault has occurred or simply indicate that further investigation is necessary) at least one event threshold is defined. Each event threshold may be considered to separate a normal operating regime and an extreme operating regime. In the case of a maximum event threshold, if the operating condition value is above the event threshold, the operating condition is in the extreme regime (that is a regime beyond the event threshold). When the operating condition value is below the event threshold it is operating in the normal regime. As will be appreciated a minimum event threshold may alternatively or additionally be set, with the/an additional extreme regime therefore existing below this event threshold. For simplicity a maximum threshold is implicitly assumed in the description hereinafter. Nonetheless the same concepts can equally be applied to a minimum threshold.

Rather than setting a fixed fleetwide event threshold, a dynamic event threshold is determined 26 based on a set of threshold determining values. Each threshold determining value corresponds to the operating condition value at a particular time (i.e. the value of the Figure 6 trace at a particular time). In this way each threshold determining value is dependent on one or more of the apparatus comparison values and therefore on one or more of the operating parameter measurements. The set of threshold determining values consists of a fixed number of temporally consecutive threshold determining values including the most recently taken value. The set of threshold determining values therefore roles as time progresses, incorporating new values and discarding old values.

The event threshold itself is determined for any given time by multiplying the standard deviation of the set of threshold determining values by a constant and adding this value to the mean of the threshold determining values. The constant is selected such that the resultant event threshold would have given rise to an event signal in all previously known cases of a failure having occurred.

As will be appreciated the event threshold will dynamically vary with time, the threshold therefore being at least somewhat tailored to the present situation (i.e. engine age, ambient conditions and engine operating regime). Nonetheless by including a sufficient number of threshold determining values in the set, the event threshold can be prevented from reacting too quickly to a sudden change in the underlying operating parameter measurements. It will not therefore simply mirror the operating condition value at any particular time. In order to further compensate for the possibility of the event threshold being unduly raised by elevated threshold determining values, threshold determining values that fall above the existing event threshold are excluded from the set of threshold determining values used to determine the event threshold.

When the engine 10 is operated for the first time there will be no operating parameter measurements from which to determine an event threshold. As a starting point a fleetwide event threshold may therefore be used initially, with this being rapidly modified using the method previously described. Similarly following engine 10 replacement or overhaul the system is re-set with a fleetwide event threshold being used as a starting point. As will be appreciated the same principal would also be applied for event thresholds set in respect of the additional operating parameters.

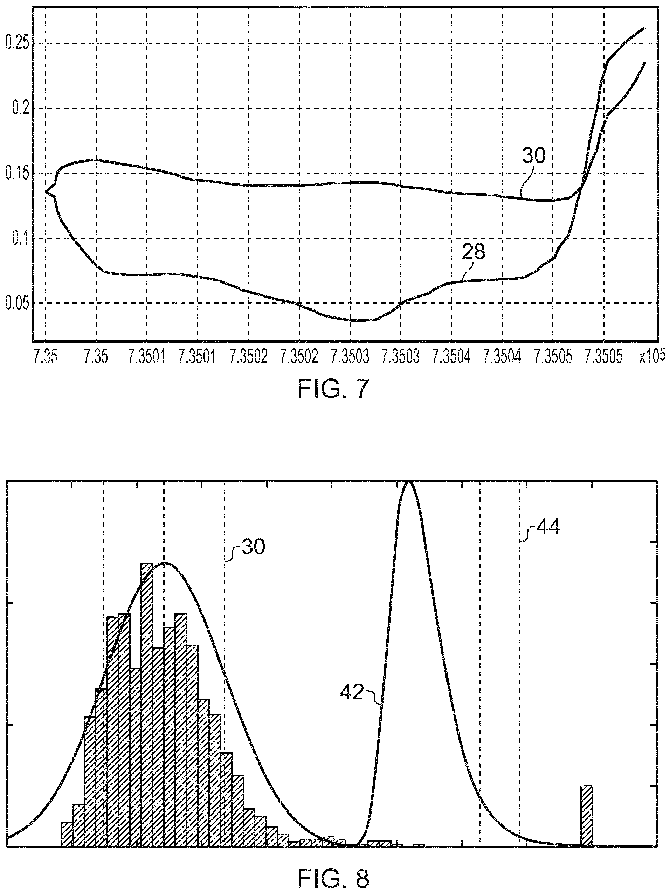

Figure 7 shows a trace of the operating condition value 28 over time of Figure 6, overlaid with the corresponding determined event threshold 30. As can be seen, towards its tail, the operating condition value 28 crosses the event threshold 30, passing from the normal regime to the extreme value regime and giving rise to an event signal.

In this case the generation of an event signal 32 does not comprise the issue of a warning that an event has occurred. Instead it indicates that the operating condition value 28 is in a regime beyond the event threshold 30 and that an abnormality may therefore have occurred. This initiates a cascade of checks 34. Each check is for the generation of either an event signal for an additional operating parameter or checking for the generation of an extreme event signal in respect of the operating parameter or an additional operating parameter, all within a predetermined time window. The cascade of checks may also include a check for an event signal or extreme event signal for a parameter dependent on the operating parameter or an additional operating parameter but that may not have been directly measured. Any event signals or extreme event signals present will be the result of the same method as already detailed being applied to additional operating parameters 36. Checks are performed 38 in the order in which they occur in the cascade.

The result of each check serves to confirm or rule out one or more possible causes of the original event signal or to perpetuate the possibility of one or more particular causes pending the result of one or more further checks in the cascade and/or a signature check (explained further later). The cascade of checks is terminated 40 once one of at least one possible predetermined pattern of check results has been found. Each predetermined pattern may correspond to a particular explanation for the original event signal or indicate that further investigation (e.g. by signature check) is required.

As noted above the cascade of checks may include one or more checks for extreme event signals, each in respect of a particular operating parameter. An extreme event signal is issued if the operating condition value is in a regime beyond a corresponding extreme value threshold. The extreme value threshold is determined 42 in accordance with an estimated distribution for the extreme value regime, the extreme value threshold being equal to the inverse cumulative distribution at a point on the estimated distribution giving a probability of false positive occurrence that is considered acceptable. The position and shape of the estimated distribution is determined by the mean and standard deviation of the set of threshold determining values.

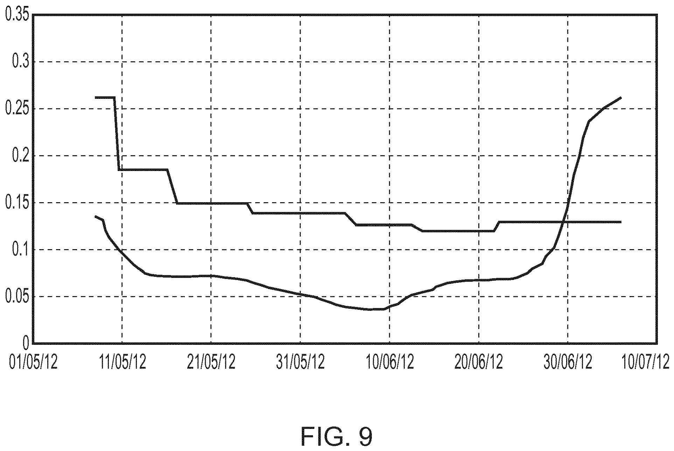

With reference to Figure 8, the estimated distribution 42 for the extreme value regime is selected as a Gumbal distribution. This is positioned beyond the event threshold 30, which itself sits on a normal distribution assumed to represent the normal regime. If and when additional threshold determining values become available, the position and shape of the Gumbal distribution is updated using Baysian techniques. During this update the extreme value threshold is carried with the distribution, potentially altering its position. As in this case, the Gumbal distribution may be updated only after a number of additional threshold determining values have been taken (e.g. in batches of five or ten), potentially giving rise to apparent discrete step changes in the extreme value threshold (see Fig. 9).

A check for the generation of an extreme event signal may serve as a cross-check to the issue of an event signal, as the normal distribution assumed to be applicable to the normal regime is known to be inaccurate in the extreme regime. If however both an event signal and an extreme event signal are generated within a predetermined time period, the corroboration will provide stronger evidence of there being a fault.

To further illustrate the cascade filtering process an example cascade of checks with hypothetical check results is given below. This particular cascade is primarily directed at establishing whether a TGT event signal is caused by a high pressure compressor failure.

1. Event signal generated for TGT. Check for event signal generation for N1.
2. No event signal generated for N1. Conclusion is that the TGT event signal is not caused by a thrust request alteration by a pilot or control system. Check for extreme event signal generation for TGT.
3. Extreme event signal generated for TGT. High pressure compressor damage remains possible. Check for event signal generation for TGT/TGT_N (that is the ratio between Turbine Gas Temperature and Nominal Turbine Gas Temperature [TGT expected as according to a thermodynamic model]).
4. Event signal generated for TGT/TGT_N. High pressure compressor damage remains possible. Check for extreme event signal generation for TGT/TGT_N.
5. Extreme event signal generated for TGT/TGT_N. Original event signal for TGT is not caused by noise or any other factor, the event signal is genuine and indicative of a fault, the fault may be a high pressure compressor fault. Cascade filter check terminated and signature check initiated 44.

The signature check comprises several steps and is designed to identify the specific fault present. The signature check is based on a pre-existing knowledge of the effect of specific faults on a set of the measured operating parameters. By way of example it may be known that a high pressure compressor fault typically causes a 2% increase in TGT, a 0.2% increase in N2, a 0.8% increase N3 and a 0.5% drop in P3. This group of changes may be considered a signature. It may furthermore be known that a different fault typically causes different specific increases/decreases in these parameters (a different signature). Many signatures with known corresponding faults may be known.

For each of TGT, N2, N3 and P3 a contemporary operating condition value average is determined from the 3 most recently determined operating condition values for that operating parameter. Further for each of TGT, N2, N3 and P3 a control operating condition value average is determined from the 20 most recently determined operating condition values for that operating parameter. The control operating condition value average and the contemporary operating condition value average and then compared to determine 46 a percentage change (positive or negative) in the respective operating parameter (TGT, N2, N3 or P3) that has occurred recently. Thereafter the predetermined signatures corresponding to known faults may be compared with the determined signature of changes in TGT, N2, N3 and P3 with a view to finding the closest correlation. The fault associated with the predetermined signature that correlates best with the determined signature is taken 48 to be the fault identified. A warning is then generated 50 indicating presence of the specific fault.

As will be appreciated the cascade and signature checks described above are only examples. Different operating parameters may be used and additional/different faults detected. The method could for example be used to detect issues with engine pressure ratio, turbofan pressure ratio, bleed, oil pressure, oil temperature and/or blade damage.

It will be understood that the invention is not limited to the embodiments above-described and various modifications and improvements can be made without departing from the various concepts described herein. Any of the features may be employed separately or in combination with any other features and the invention extends to and includes all combinations and sub-combinations of one or more features described herein in any form of operating parameter monitoring method. In particular it is noted that although the specific description relates to aircraft gas turbine engines, the invention is not limited to this application and the principals explained could be equally well applied to other systems including for example apparatus used in the marine or energy sectors.

## Claims

1. A method of monitoring an operating parameter of an apparatus forming part of a system comprising one or more additional apparatus, the method comprising the steps of:

   a) taking a measurement of the operating parameter of the apparatus on multiple occasions and of the same operating parameter of the one or more additional apparatus on multiple occasions;

   b) determining one or more apparatus comparison values, each defined as the difference between a measurement of the operating parameter of the apparatus and the average of the same operating parameter measured at the same time for the one or more additional apparatus;

   c) i) determining an operating condition value, whereby the operating condition value is dependent upon one or more of the apparatus comparison values;

   c) ii) determining a set of threshold determining values, whereby each threshold determining value of the set of threshold determining values corresponds to the operating condition value at a particular time, and the set of threshold determining values comprises temporally consecutive threshold determining values;

   d) determining an event threshold by multiplying the standard deviation of the set of threshold determining values by a constant, and adding the result to the mean of the set of threshold determining values;

   e) generating an event signal if the operating condition value is in a regime beyond the event threshold.

2. A method according to claim 1 where each threshold determining value is equal to the value of a trace at a particular time, the trace resulting from the summation of a smoothed trace of a set of the apparatus comparison values and a smoothed trace of the derivative of the set of apparatus comparison values.

3. A method according to any preceding claim further comprising determining an extreme value threshold which is dependent on the mean and standard deviation of the set of threshold determining values.

4. A method according to claim 3 where an extreme event signal is generated if the operating condition value is in the regime beyond the extreme value threshold.

5. A method according to any preceding claim where the method of monitoring an operating parameter is simultaneously performed for one or more additional different operating parameters of the same apparatus.

6. A method according to claim 5 when dependent through to claim 5 where the method further comprises a cascade checking process triggered by the generating of an event signal and comprising at least one check, the order in which each check is performed being pre-determined by the position of the check in a cascade, each check comprising one of the following:

a) whether an event signal has been generated for a particular one of the additional operating parameters at the same time as the event signal for the operating parameter;

b) whether an extreme event signal has been generated for the operating parameter at the same time as the event signal for the operating parameter;

c) whether an extreme event signal has been generated for a particular one of the additional operating parameters at the same time as the event signal for the operating parameter.

7. A method according to claim 6 where the termination of the cascade check initiates a signature check comprising the steps of:

a) for each of a set of one or more of the monitored operating parameters determining a contemporary operating condition value average from a predefined number of the most recent operating condition values determined in respect of that operating parameter;

b) for each of the set of monitored operating parameters determining a control operating condition value average from a larger predefined number of operating condition values determined in respect of that operating parameter;

c) for each of the set of monitored operating parameters comparing the contemporary operating condition value average to the control operating condition value average to produce a magnitude and direction change from the control operating condition value average to the contemporary operating condition value average;

d) searching for the best correlation across all magnitude and direction changes produced for the set of monitored operating parameters to one of a number of predetermined magnitude and direction change signatures, each signature containing a magnitude and direction change for one or more of the monitored operating parameters in the set and each signature being known to be indicative of a particular fault;

e) generating a warning indicative of the fault associated with the best correlating signature.

8. A system arranged to perform the method according to any of claims 1 to 7.

9. A machine readable medium, the content of which, when run by a processing system, performs the method according to any of claims 1 to 7.

**Patentansprüche**

1. Verfahren zum Überwachen eines Betriebsparameters einer Vorrichtung, die Teil eines Systems ist, welches ein oder mehrere weitere Vorrichtungen umfasst, wobei das Verfahren folgende Schritte umfasst:

a) Vornehmen einer Messung des Betriebsparameters der Vorrichtung bei mehreren Gelegenheiten und einer Messung desselben Betriebsparameters bei der einen oder den mehreren weiteren Vorrichtungen bei mehreren Gelegenheiten;

b) Bestimmen eines oder mehrerer Vorrichtungsvergleichswerte, wobei jeder als die Differenz zwischen einer Messung des Betriebsparameters der Vorrichtung und dem Durchschnitt desselben Betriebsparameters definiert ist, der zum selben Zeitpunkt für die eine oder die mehreren weiteren Vorrichtungen gemessen wird;

c) i) Bestimmen eines Betriebszustandswerts, wobei der Betriebszustandswert von einem oder mehreren der Vorrichtungsvergleichswerte abhängt;

c) ii) Bestimmen einer Gruppe von Grenzbestimmungswerten, wobei jeder Grenzbestimmungswert aus der Gruppe von Grenzbestimmungwerten dem Betriebszustandswert zu einer bestimmten Zeit entspricht und die Gruppe von Grenzbestimmungswerten zeitlich aufeinander folgende Grenzbestimmungswerte umfasst;

d) Bestimmen einer Ereignisgrenze durch Multiplizieren der Standardabweichung der Gruppe von Grenzbestimmungswerten durch eine Konstante und Addieren des Ergebnisses zum Mittelwert der Grenzbestimmungswerte;

e) Erzeugen eines Ereignissignals, wenn der Betriebszutandswert in einem Regelwerk über der Ereignisgrenze liegt.

2. Verfahren nach Anspruch 1, wobei jeder Grenzbestimmungswert gleich dem Wert einer Spur zu einer bestimmten Zeit ist, wobei die Spur das Ergebnis aus der Addition einer geglätteten Spur einer Gruppe der Vorrichtungsvergleichswerte und einer geglätteten Spur der Abweichung der Gruppe der Vorrichtungsvergleichswerte ist.

3. Verfahren nach einem der vorstehenden Ansprüche, ferner umfassend das Ermitteln einer Extremwertgrenze, die von dem Mittelwert und der Standardabweichung der Gruppe von Grenzbestimmungswerten abhängt.

4. Verfahren nach Anspruch 3, wobei ein Extremereignissignal erzeugt wird, wenn der Betriebszustandswert im Regelwerk über der Extremwertgrenze liegt.

**5.** Verfahren nach einem der vorstehenden Ansprüche, wobei das Verfahren des Überwachens eines Betriebsparameters gleichzeitig für einen oder mehrere weitere Betriebsparameter derselben Vorrichtung ausgeführt wird.

**6.** Verfahren nach Anspruch 5, wenn abhängig bis Anspruch 5, wobei das Verfahren ferner einen Kaskadenkontrollprozess umfasst, der durch die Erzeugung eines Ereignissignals ausgelöst wird und mindestens eine Kontrolle umfasst, wobei die Reihenfolge, in der jede Kontrolle durchgeführt wird, durch die Position der Kontrolle in einer Kaskade vorgegeben ist, wobei jede Kaskade eines der Folgenden umfasst:

a) ob ein Ereignissignal für einen bestimmten der weiteren Betriebsparameter zur selben Zeit wie das Ereignissignal für den Betriebsparameter erzeugt wurde;
b) ob ein Extremereignissignal für den Betriebsparameter zur selben Zeit wie das Ereignissignal für den Betriebsparameter erzeugt wurde;
c) ob ein Extremereignissignal für einen bestimmten der weiteren Betriebsparameter zur selben Zeit wie das Ereignissignal für den Betriebsparameter erzeugt wurde.

**7.** Verfahren nach Anspruch 6, wobei durch die Beendigung der Kaskadenkontrolle eine Signaturkontrolle initiiert wird, die die folgenden Schritte umfasst:

a) für jeden aus einer Gruppe von einem oder mehreren überwachten Betriebsparametern Bestimmen eines gleichzeitigen Betriebszustandswert-Durchschnitts aus einer vordefinierten Anzahl der letzten Betriebszustandswerte, die in Bezug auf diesen Betriebsparameter bestimmt wurden;
b) für jeden aus der Gruppe von überwachten Betriebsparametern Bestimmen eines Kontroll-Betriebszustandswert-Durchschnitts aus einer größeren vordefinierten Anzahl von Betriebszustandswerten, die in Bezug auf diesen Betriebsparameter bestimmt wurden;
c) für jeden aus der Gruppe von überwachten Betriebsparametern Vergleichen des gleichzeitigen Betriebszustandswert-Durchschnitts mit dem Kontroll-Betriebszustandswert-Durchschnitt, um eine Größen- und Richtungsänderung des Kontroll-Betriebszustandswert-Durchschnitts zum gleichzeitigen Betriebszustandswert-Durchschnitts zu erzeugen;
d) Suchen nach der besten Korrelation in allen Größen- und Richtungsänderungen, die für die Gruppe von überwachten Betriebsparametern erzeugt wurden, mit einer aus einer Anzahl vorgegebener Größen- und Richtungsänderungs-Signaturen, wobei jede Signatur eine Größen- und Richtungsänderung für einen oder mehrere der überwachten Betriebsparameter in der Gruppe enthält und jede Signatur bekannterweise einen bestimmten Fehler anzeigt;
e) Erzeugen einer Warnung, die den der am besten korrelierenden Signatur zugeordneten Fehler anzeigt.

**8.** System, das angeordnet ist, um das Verfahren nach einem der Ansprüche 1 bis 7 auszuführen.

**9.** Maschinenlesbares Medium, dessen Inhalt, wenn er auf einem Verarbeitungssystem abläuft, das Verfahren nach einem der Ansprüche 1 bis 7 ausführt.

**Revendications**

**1.** Méthode de contrôle d'un paramètre fonctionnel d'un appareil faisant partie d'un système comprenant un ou plusieurs appareils additionnels, la méthode comprenant les étapes suivantes :

a) prise d'une mesure du paramètre fonctionnel de l'appareil en plusieurs occasions, et du même paramètre fonctionnel sur un ou plusieurs appareils additionnels en de multiples occasions ;
b) détermination d'une ou plusieurs valeurs de comparaison de l'appareil, chacune étant définie comme la différence entre une mesure du paramètre fonctionnel de l'appareil et la moyenne du même paramètre fonctionnel mesuré au même moment sur l'un ou plusieurs appareils additionnels ;
c) i) détermination d'une valeur de mode de fonctionnement, la valeur de mode de fonctionnement étant tributaire d'une ou plusieurs valeurs de comparaison de l'appareil ;
c) ii) détermination d'un jeu de valeurs de détermination seuil,
chaque valeur de détermination seuil du jeu de valeurs de détermination seuil correspondant à la valeur de mode de fonctionnement à un moment donné, et le jeu de valeurs de détermination seuil comprenant des valeurs de détermination seuil consécutives dans le temps ;
d) détermination d'un seuil d'événement par la multiplication de l'écart type du jeu de valeurs de détermination seuil par une constante, puis par l'addition du résultat à la moyenne du jeu de valeurs de détermination seuil ;
e) génération d'un signal d'événement si la valeur de mode de fonctionnement se trouve dans un régime au-delà du seuil d'événement.

**2.** Méthode selon la revendication 1, chaque valeur de détermination seuil étant égale à la valeur d'une trace à un moment donné, la trace résultante de la somme d'une trace lissée d'un jeu de valeurs de comparaison de l'appareil et d'une trace lissée de la dérivée du jeu de valeurs de comparaison de l'appareil.

3. Méthode selon une quelconque des revendications précédentes, comprenant en outre la détermination d'une valeur seuil extrême, qui est tributaire de la moyenne et de l'écart type du jeu de valeurs de détermination seuil.

4. Méthode selon la revendication 3, dans laquelle un signal d'événement extrême est généré si la valeur de mode de fonctionnement se trouve dans le régime au-delà de la valeur seuil extrême.

5. Méthode selon une quelconque des revendications précédentes, la méthode de contrôle d'un paramètre fonctionnel étant effectuée simultanément pour le ou plusieurs paramètres fonctionnels additionnels différents du même appareil.

6. Méthode selon la revendication 5, lorsqu'en fonction de la revendication 5 lorsque la méthode comprend en outre un processus de contrôle en cascade déclenché par la production d'un signal d'événement, et comprenant au moins un contrôle, l'ordre dans lequel chaque contrôle est effectué étant prédéterminé par la position du contrôle en cascade, chaque contrôle comprenant un des suivants :

   a) si un signal d'événement a été généré pour un paramètre particulier des paramètres fonctionnels additionnels au même moment que le signal d'événement pour le paramètre fonctionnel ;
   b) si un signal d'événement d'extrême a été généré pour le paramètre fonctionnel au même moment que le signal d'événement pour le paramètre fonctionnel ;
   c) si un signal d'événement d'extrême a été généré pour un paramètre particulier parmi les paramètres fonctionnels additionnels au même moment que le signal d'événement pour le paramètre fonctionnel.

7. Méthode selon la revendication 6, lorsque la cessation du contrôle en cascade déclenche un contrôle de signature comprenant les étapes suivantes :

   a) pour chaque paramètre d'un jeu d'un ou plusieurs paramètres fonctionnels contrôlés déterminant une moyenne présente des valeurs du mode de fonctionnement d'après un nombre prédéfini des valeurs de mode de fonctionnement les plus récentes, déterminé relativement à ce paramètre fonctionnel ;
   b) pour chaque paramètre du jeu de paramètres fonctionnels contrôlés déterminant une moyenne des valeurs du mode de fonctionnement de contrôle d'après un nombre prédéfini plus élevé de valeurs du mode de fonctionnement déterminées en fonction de ce paramètre fonctionnel ;
   c) pour chaque paramètre du jeu de paramètres fonctionnels contrôlés, la comparaison de la moyenne présente des valeurs du mode de fonctionnement avec la moyenne des valeurs du mode de fonctionnement de contrôle pour produire une magnitude et un changement de direction d'après la moyenne des valeurs du mode de fonctionnement de contrôle par rapport à la moyenne présente des valeurs du mode de fonctionnement ;
   d) recherche de la meilleure corrélation parmi tous les changements de magnitude et de direction produits pour le jeu de paramètres fonctionnels contrôlés avec un nombre de signatures prédéterminées de changements de magnitude et de direction, chaque signature contenant un changement de magnitude et de direction pour le ou plusieurs paramètres fonctionnels contrôlés du jeu, et chaque signature étant connue comme étant indicatrice d'une certaine faute ;
   e) production d'un avertissement indicatif de la faute associée avec la meilleure signature de corrélation.

8. Système agencé pour l'exécution de la méthode selon une quelconque des revendications 1 à 7.

9. Support lisible par machine, dont le contenu fonctionne selon la méthode d'une quelconque des revendications 1 à 7 lors de son exécution par un système de traitement.

FIG. 1

FIG. 2

FIG. 3

FIG. 4

FIG. 5

FIG. 6

EP 2 853 971 B1

FIG. 7

FIG. 8

16

FIG. 9

EP 2 853 971 B1

| 12 | 14 | 16 | 18 | 20 | 22 | 24 |
|---|---|---|---|---|---|---|
| Measure operating parameter on multiple occasions over time for engine 1 | Determine engine comparison value for the operating parameter at each time interval | Plot trace of engine comparison values | Smooth trace | Plot trace of rate of change of engine comparison values | Smooth trace | Sum traces |

Measure the operating parameter on multiple occasions over time for engine 2

Measure the operating parameter on multiple occasions over time for engine 3

26 — Determine and update event threshold using summed traces

38 — Check for event signal or extreme event signal for the operating parameter or additional operating parameter in order determined by cascade

34 — Initiate cascade check following event signal

32 — Output event signal if sum of traces enters the regime beyond the event threshold

36 — Simultaneously perform previous steps for one or more additional performance parameters

42 — Determine and update extreme event threshold using summed traces

40 — Terminate cascade when predetermined pattern of check results found

44 — Where cascade indicates fault present initiate signature check

46 — Determine percentage change and sign of change in summed trace for operating parameter and additional operating parameters

48 — Find best correlation between changes and predefined changes known to arise from particular faults

50 — Output fault warning for best correlating fault

FIG. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2009016020 A1
- US 2012161965 A1
- EP 2469041 A1